# EUROPEAN PATENT APPLICATION

(11) **EP 1 332 805 A1**
(43) Date of publication of application: **06.08.2003**
(21) Application number: 01981048.0
(22) Date of filing: 09.11.2001
(51) Int. Cl.: B09B 3/00, C05F 9/02

(54) **WASTE DISPOSAL EQUIPMENT**

(30) Priority: 09.11.2000 JP 2000341483
(71) Applicant: DAIHATSU DIESEL MFG. CO., LTD., Osaka-shi Osaka 540-0025 (JP); Sakata, Atsushi, Nishinomiya-shi, Hyogo 663-8004 (JP)
(72) Inventor: SAKATA, Atsushi, Nishinomiya-shi, Hyogo 663-8004 (JP)
(74) Representative: Johnstone, Douglas Ian
(86) International application number: JP0109823
(87) International publication number: WO02038297

(57) **Abstract**

Waste disposal equipment capable of reducing the volume of garbage and changing the garbage into fertiliser in a short period without producing odour, comprising an elongate processing tank (1) for receiving processed matter such as garbage and a processing agent and an agitating device (2) for agitating the processed matter and processing agent in the processing tank (1). The processing tank (1) further comprising a charging inlet (16) for the processed matter and processing agent provided at one end thereof and an outlet (17) provided at the other end thereof. The agitating device (2) further comprising a longitudinally positioned shaft (21) in the processing tank (1) and a large number of plate-like agitating blades (22) mounted on the shaft (21) at approximately equal intervals in axial and circumferential directions so that the tip parts thereof lie on a spiral.

## Description

### Field of the invention

This invention relates to waste disposal equipment for processing waste matter such as garbage by fermentation to make compost. This invention comprises a processing tank and an agitation device wherein waste matter between an inlet port and an outlet port is progressively arranged in order of its maturity from recently charged matter to well processed matter.

### Background of the Invention

Food waste garbage comprises a mixture of waste materials from cooking processes and left-overs containing meat, fish, vegetables, grain and so on which are left raw and/or cooked. The process of decay of chemicals therein causes bad odours and lower fatty acids, lower amines, ammonia and hydrogen sulfide are generated which chemicals are complex and produce a distinctive foul odour. As well as the odour, multiplying flies and bacteria in the garbage become sources of environmental pollution.

To date, many treating methods have been proposed for processing garbage to make compost by means of fermentation by microbial action and/or catalysis.

For example, for composting garbage by fermentation, the method of making use of microbes and analysing organic matter has been proposed.

However this processing method using fermentation has the following problems. A long period, such as about 20-30 days is required for processing to turn the garbage into compost. A bad odour is emitted. A stable uniform progression of maturing cannot be attained and it is difficult to analyse the speed of maturing which depends on the temperature and/or the contents of the waste matter.

The application of this fermentation method using microbes to garbage such as that containing garlic and chilli is especially difficult because of the bacterial action of garlic and chilli.

Accordingly, it is an object of this invention to provide improved garbage processing equipment to shorten processing time, and to change waste matter like garbage into compost having a uniform quality and consequently reduce its volume and weight.

### Disclosure of the invention

The invention discloses equipment comprising an elongate processing tank 1 into which waste matter can be charged to be processed as garbage and a processing agent, the equipment comprising an agitation device 2 for agitating the waste matter and the processing agent in the processing tank 1.

The processing tank 1 further comprises an inlet port 16 at one end for the charging of waste matter to be processed and the processing agent and an outlet 17 at an upper part of the other end.
The agitating device 2 comprises a shaft 21 passing longitudinally through the inside of the processing tank 1 and further comprises many plate-like agitating blades 22 fixed on the shaft 21 at approximately equal intervals in the axial direction and with approximately equal angular spacing relative to each other around the shaft so that end parts thereof define a spiral. Each agitating blade 22 comprises a plate having a rectangular cross-section, the plate being installed so that the longer sides of the cross-section lie at right angles to the axis of the shaft 21 and are not twisted with respect to the axis of the shaft like a screw.

### Brief description of the drawings

Fig. 1 is a longitudinal sectional view showing the outline of the invented waste disposal equipment
Fig. 2 is a transverse sectional view showing the outline of the invented waste disposal equipment
Fig. 3 is a perspective view showing the agitation device with many blades installed on the shaft.

### Best mode for carrying out the invention

The invention comprises equipment having a crusher therein so that waste matter such as fish, meat, vegetables and so on are crushed in advance into an appropriate size. After being crushed, the waste matter such as garbage and so on to be treated are charged into the processing apparatus together with soil, a processing agent (ferrous sulfate, magnesium sulfate etc), water and so on as additives.

The waste disposal equipment comprises a processing tank 1, an agitating device 2 and a warm air generator 3 for feeding warm air into the processing tank 1.

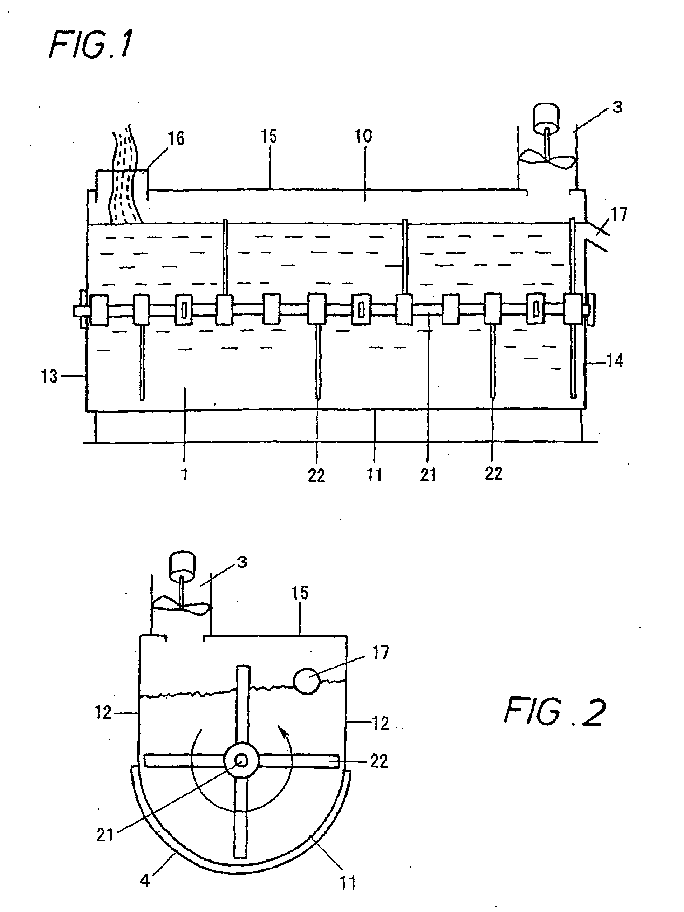

The processing tank 1 has a long processing compartment 10 extending in the longitudinal direction of the tank surrounded by a base 11 of semicircular section, side walls 12, front wall 13, rear/end wall 14 and a cover 15 as shown in Fig. 1 and Fig. 2. Furthermore, an inlet port 16 is provided near to the front wall 13 in the cover 15 of the processing tank 1 for charging the tank with waste matter like garbage etc., soil and processing agents. An outlet port 17 is provided in the upper part of the rear wall 14 of the processing tank 1 and the warm air generator 3 is provided on the cover 15 at the rear end part near to the outlet port 17 for feeding warm air into the processing compartment 10. A heater 4 is also provided outside the base 11 for heating up the waste matter to be processed.

The warm air generator 3, warms up the air outside and supplies the air and heat to the processing tank as required for processing waste matter.

The agitation device 2 comprises a shaft 21 and many agitating blades 22 fixed on the shaft 21. The shaft 21 is supported by bearings fitted in both end walls 13 and 14 and passes through the processing compartment 10 along the centerline of the semicircular base 11 of the processing tank 1.

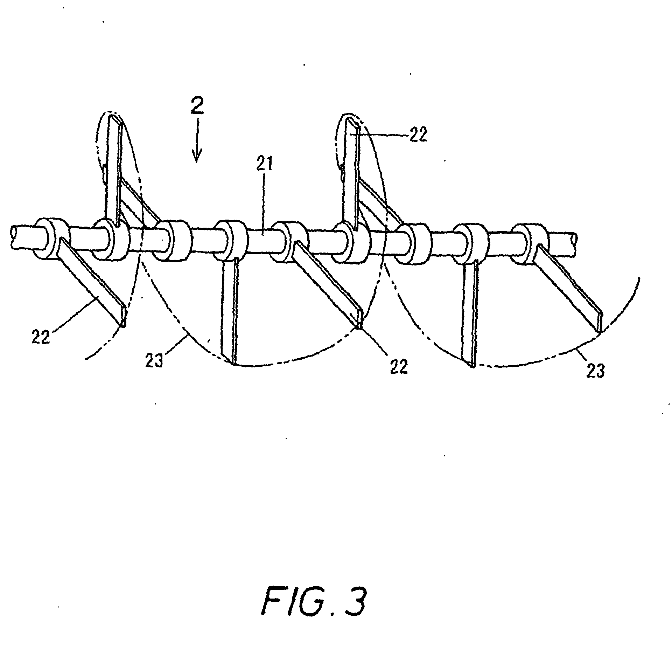

Many agitating blades 22 are installed on the shaft 21 at approximately equal intervals in the longitudinal direction of the shaft 21 and with equal angular spacing relative to each other around the shaft 21, so that respective ends of the blades 22 may define a spiral such as that shown by a chain double-dashed line 23 in the perspective view of Fig. 3.

Each agitating blade 22 is a plate type blade having a rectangular cross-section and is installed on the shaft 21 with the longer sides of the cross-section perpendicular to the axis of the shaft 21 for providing a greater moment of inertia.

The shaft 21 is rotated at a low speed by a motor with a reduction gear (not shown) provided outside the processing compartment 10.

### Preferred embodiment

Waste matter like garbage, crushed in advance to pieces of appropriate size by the crusher, are charge into the inlet port 16 of the processing tank 1 together soil, processing agents and water. Starting the agitation device 2, the rotating blades 22 uniformly mix the water, the soil, the processing agents and waste matter such as garbage.

During the agitation process, agitated waste matter is moved step by step in the longitudinal direction of processing tank 1. The agitating blades 22, unlike screws, are fixed to the shaft 21 perpendicularly to the axis of the shaft at equal intervals and with equal angular spacings around the shaft 21 so that the tops of the blades 22 may define a spiral.

The agitation device 2 agitates the waste matter mainly in the place of rotation of the blades 22 while hardly mixing the waste matter in the longitudinal direction of the processing tank 1. Therefore, it takes a long time for the waste matter to be processed to move towards the outlet port 17. Accordingly the waste matter from freshly charged matter through to matured matter is arranged in the processing tank 1 from the inlet port 16 towards the outlet port 17 in a manner dependent on the extent to which the matter has been processed.

By charging waste matter periodically into the processing compartment whenever garbage is generated, the processing compartment is filled in due course with the waste matter, and fully matured waste matter is discharged from the discharge port 17. Water is supplied appropriately if insufficient water is present due to evaporation occurring during the processing.

The warm air generator 3 heats air from outside the processing tank, and introduces the warmed air into the processing tank 1 to supply and warm the air required for the maturing process and furthermore to dry the waste matter as it comes close to the outlet port 17. Thus fully matured waste matter turned into dry powder (dried sand) is discharged from the discharge port 17.

The embodiment as described above concerns the processing of waste matter such as garbage. However this method is also applicable to the processing of fallen leaves, mowed weeds and grass, sludge and the night soil of livestock. For the processing agents of this invention, a mixture of ferrous sulfate and magnesium in the ration of 1:1 is appropriate as the major component with sulfuric acid group being added to pH in the range 1.7-2 for preventing oxidation. By mixing the garbage with such mixture of processing agents and clay soil, and adding an adequate quantity of water, agitating for about 16-30 hours at a warm temperature of about 60° to 80°C, the bad odour of the garbage is rapidly deodorised and the processed garbage becomes soil compost with effective ingredients for agricultural use.

The above-mentioned embodiment of the invention is merely an example, which can be modified or altered in variants of the invention without missing the object thereof. For example, the equipment of this invention is applicable for the conventional treatment method making use of fermentation by microbes and the blades may not only be plate shaped but round bars are alternatively usable as agitating blades.

### Applicability to the industrial use

As proved by the embodiment as described above, the following successful outcome is achieved from this invention. Regardless of the single processing tank having no bulkhead, the charged waste matter between the inlet port and the outlet port is progressively arranged in order of its maturity from freshly charged matter at the inlet port to matured matter at the outlet port and therefore completely treated waste matter can be discharged first.

## Claims

1. Waste disposal equipment comprising an elongate processing tank into which waste matter to be processed like garbage together with treating agents can be charged and an agitation device inside the processing tank for agitating said waste matter and treating agents, wherein:
said processing tank has an inlet port at one end for charging waste matter to be processed and treating agents into said processing tank and a discharge port at an upper part of the other end of said processing tank, said agitation device being composed of a shaft fixed inside said processing tank and extending in a longitudinal direction thereof, and many agitating blades fixed on the shaft at approximately equal intervals apart from each other in the axial direction thereof and with approximately equal angular spacing relative to each other around the shaft so that ends of said blades lie on a spiral.

2. The waste disposal equipment of claim 1, wherein:
said agitating blades comprise plates each having a rectangular cross-section, which are fixed to said shaft without any twist whereby surfaces of the plates are disposed perpendicularly to a longitudinal axis of said shaft.

3. The waste disposal equipment of claim 1 or 2 comprising:
a warm air generator for feeding warm air into a rear end part of said processing tank near said discharge port and towards the inlet port.
